# EUROPÄISCHE PATENTSCHRIFT

(11) **EP 2 326 529 B1**
(45) Veröffentlichungstag und Bekanntmachung des Hinweises auf die Patenterteilung: **11.12.2013**
(21) Anmeldenummer: 09782477.5
(22) Anmeldetag: 01.09.2009
(51) Int. Cl.: B60L 11/18

(54) **STEUERVORRICHTUNG FÜR EINE STROMTANKSTELLE ZUM STROMBEZUG UND/ODER ZUR STROMEINSPEISUNG EINER MOBILEN SPEICHER- UND VERBRAUCHSEINHEIT**
CONTROL DEVICE FOR AN ELECTRIC VEHICLE CHARGING STATION FOR FEEDING POWER TO AND/OR OBTAINING POWER FROM A MOBILE STORAGE AND CONSUMPTION UNIT
DISPOSITIF DE COMMANDE DE STATION SERVICE ÉLECTRIQUE POUR LE RAVITAILLEMENT EN COURANT D'UNE UNITÉ MOBILE D'ACCUMULATION ET DE CONSOMMATION ET/OU LA RÉINJECTION DE COURANT DANS LE RÉSEAU À PARTIR DE CETTE UNITÉ MOBILE

(30) Priorität: 16.09.2008 DE 102008044528
(43) Veröffentlichungstag der Anmeldung: 01.06.2011
(73) Patentinhaber: EnBW Energie Baden-Württemberg AG, 76131 Karlsruhe (DE)
(72) Erfinder: FREY, Hellmuth, 76227 Karlsruhe (DE); HEISS, Jürgen, 76229 Karlsruhe (DE); KESSLER, Alois, 75417 Mühlacker (DE); MÜNCH, Wolfram, 76593 Gernsbach (DE); NIEHAUS, Thorsten, 76185 Karlsruhe (DE); WALCH, Lars, 76307 Karlsbad (DE)
(74) Vertreter: Meyer-Dulheuer, Karl-Hermann
(86) Internationale Anmeldenummer: PCT/EP2009/061300
(87) Internationale Veröffentlichungsnummer: WO 2010/031691

(56) Entgegenhaltungen:
- WO-A-2008/073453
- WO-A-2008/107767
- FR-A- 2 827 711
- US-A1- 2002 132 144
- US-A1- 2007 126 395

## Beschreibung

Die Erfindung betrifft eine Steuervorrichtung für eine Stromtankstelle, welche für einen Strombezug und/oder eine Stromeinspeisung einer mobilen Speicher- und Verbrauchseinheit geeignet ist.

Zur Abdeckung des wachsenden Energiebedarfs von elektrisch angetriebenen Fahrzeugen werden u.a. öffentlich zugängliche kostenpflichtige oder kostenlose Stromtankstellen genutzt. Derartige Stromtankstellen stellen dabei die für das Aufladen eines Akkumulators eines Elektrofahrzeugs notwendige elektrische Energie bereit. So beschreibt die US-A 4,052,655 A1 eine Stromladeanlage mit mehreren jeweils autark arbeitenden Zapfsäulen, die jeweils mit mindestens einer Steckdose zum Anstecken eines Ladekabels und einer diesem zugeordneten mechanischen Sicherung versehen sind und denen jeweils eine Energiemengenzähleinrichtung und den Strompreis ermittelnde Recheneinrichtung zugeordnet sind. Die Bezahlung erfolgt dabei durch Münzeinwurf, was eine aufwändige Diebstahlsicherung erforderlich macht und einen hohen Wartungs- und Überwachungsaufwand bedingt.

Das Aufladen von Automobilen an jeweils autark arbeitenden, an das Stromnetz angeschlossenen Parkuhren während der Parkzeit ist aus der DE 41 01 053 A1 bekannt, bei der die abgenommene Strommenge durch Geldmünzen oder mit einer Scheckkarte gezahlt wird. Auch die DE 295 05 733 U1 beschreibt ein La-desystem für Elektroautos mit einem Scheckkarten- oder Münzautomaten. Dabei stellt sich das Problem, dass diverse Manipulationsmöglichkeiten bestehen.

Auch die DE 42 13 414 C2 beschreibt eine Stromladeanlage mit mehreren Stromzapfsäulen, die jeweils mit wenigstens einer Steckdose zum Anstecken eines Ladekabels und mit einer diesem zugeordneten mechanischen Sicherung versehen sind und denen jeweils eine Energiemengenzähleinrichtung und eine den Strompreis ermittelnde Recheneinrichtung zugeordnet sind, wobei ein zentraler Terminal vorgesehen ist, der die mit den Energiemengenzähleinrichtungen aller Stromzapfsäulen signalleitungsverknüpfte Recheneinrichtung enthält und mit den betriebsnotwendigen Komponenten aller Stromzapfsäulen signalleitungsverknüpft ist. Weiterhin ist zwischen den Terminal und jede Stromzapfsäule jeweils eine dieser zugeordneten Interfaceeinrichtungen eingeschaltet, die eine den Betriebszustand einer mechanischen Sicherung kontrollierende Sicherungseinrichtung, eine bei Funktionsstörungen ansprechende Sicherungseinrichtung und eine Fehlerströme überwachende Sicherungseinrichtung enthält. Bei dieser Stromtankstelle enthält die Kontrolleinrichtung insbesondere eine Magnetkarten-Leseeinrichtung für Identifikationskarten. Auch eine derartige Vorrichtung muss sehr komplex aufgebaut sein und kann eine missbräuchliche Benutzung nicht verhindern.

Mit steigender Anzahl von Elektrofahrzeugen in den Innenstädten ergibt sich die Problematik, dass eine große Anzahl unterschiedlicher Benutzer eine Stromtankstelle beanspruchen. Es sollte jedoch möglichst eine benutzergerechte Abrechnung erfolgen, da im Gegensatz zu betriebsinternen Stromparkplätzen die Abrechnung nicht von einem einzigen Betreiber beglichen werden muss. So ist insbesondere die Möglichkeit nicht auszuschließen, dass einzelne Energieverbraucher bemüht sind, die gelieferte Energiemenge nicht selbst zu bezahlen. Vor diesem Hintergrund beschreibt die DE 44 14 008 C2 eine Anordnung zur Abgabe von elektrischer Energie an Kraftfahrzeuge mit einem Anschluss an eine elektrische Energieversorgung, einer Kommunikationseinheit, welche eine Eingabevorrichtung zur Bestätigung durch den Benutzer aufweist sowie eine Ausgabevorrichtung für Informationen an den Benutzer, einer Freigabeschaltung, die in Abhängigkeit von der Eingabe des Benutzers die Energieabgabe freischaltet, wobei erst nach einem Abgleich von Informationen aus der Eingabevorrichtung mit Informationen, die als Identifizierungsdaten vom Kraftfahrzeug zu der Freigabeschaltung übertragen werden, eine Freigabe der Energieabgabe erfolgt. Dabei wird insbesondere ein Kartenlesegerät benutzt, wobei eine diesem zugeordnete Karte Angaben über den Benutzer und über das Kraftfahrzeug enthält. Auch eine solche Vorrichtung ist mindestens mit einem Kartenlesegerät ausgestattet, sodass ein Missbrauch beim Strombezug nicht ausgeschlossen werden kann. Weiterhin ermöglicht diese bekannte Vorrichtung auch keine wirkliche benutzerspezifische Abrechnung bei unterschiedlichen Stromlieferanten.

Der vorliegenden Erfindung liegt deshalb die Aufgabe zu Grunde, eine Stromtankstelle zum ortsunabhängigen Strombezug und/oder zur ortsunabhängigen Stromeinspeisung einer mobilen Speicher- und Verbrauchseinheit bereitzustellen, welche einen überwachungslosen Betrieb, eine hohe Betriebs- und Funktionssicherheit sowie einen hohen Bedienungskomfort aufweist und insbesondere die missbräuchliche Benutzung verhindert. Weiterhin soll eine benutzerspezifische Abrechnung mit den jeweiligen Stromlieferanten möglich sein.

Diese der Erfindung zugrunde liegende Aufgabe wird durch eine Steuervorrichtung für eine Stromtankstelle nach Anspruch 1 gelöst.

Gemäß einer vorteilhaften Weiterentwicklung der Vorrichtung kann die Messeinrichtung weiterhin den Energieverbrauch eines oder mehrerer Eigenverbraucher der Stromtankstelle messen.

Vorteilhafterweise ist die Vorrichtung so aufgebaut, dass eine Signatureinheit derart mit der Messeinrichtung verbunden ist, dass eine eichrechtliche Zulassung dieser Kombination und der damit erzeugten signierten Messwerte für Abrechnungszwecke erzielt werden kann.

Das zentrale Steuergerät enthält vorzugsweise mindestens einen Microprozessor, ein persistentes Speicherelement, eine Einrichtung zur Selbstüberwachung und eine Echtzeituhr.

Das zentrale Steuergerät ist die Schaltzentrale innerhalb der Steuervorrichtung. Das Steuergerät bezieht dazu über interne Schnittstellen insbesondere Informationen, die zur Identifikation sowie zur Verschlüsselung der über die Messeinrichtung ermittelten Daten erforderlich sind. Gleichzeitig steuert das Steuergerät den Aktor, der einen Schalter betätigt, um bei erfolgter Freigabe den Ladevorgang eines Akkumulators des Elektrofahrzeugs zu starten oder zu stoppen. Dieser Vorgang ist bidirektional, das heißt ebenso wird über den Aktor die Einspeisung aus dem Akkumulator in die Stromtankstelle gestartet und gestoppt.

Das Kommunikationsmodul weist vorzugsweise einen modularen Aufbau auf, der eine einfache Adaption an verschiedene Übertragungsmedien, Datenübertragungsprotokolle und Datenübertragungsstandards durch Parametrisierung oder einen Modulwechsel erlaubt.

Im Kommunikationsmodul werden also Daten aus dem Steuergerät für die Kommunikation mit dem Elektrofahrzeug und/oder für die Kommunikation mit einem Abrechnungsserver aufbereitet. Dazu werden die Daten in übertragungsfähige Signale auf der Basis geeigneter standardisierter oder proprietärer Protokolle umgewandelt. Die Kommunikation erfolgt bidirektional, das heißt das Kommunikationsmodul wandelt ebenso eintreffende Signale in für das Steuergerät verarbeitbare Daten um.

Die Messeinrichtung enthält vorzugsweise mindestens eine Signatureinrichtung oder ist derart mit einer Signatureinrichtung verbunden, dass eine eichrechtliche Zulassung dieser Kombination und der damit erzeugten signierten Messwerte für Abrechnungszwecke erzielt werden kann.

Die Messeinrichtung misst die Menge der durchfließenden elektrischen Energie, vorzugsweise in kWh, und übermittelt diese an das Steuergerät. Dieser Prozess ist bidirektional, das heißt es kann sowohl ein Ladeprozess als auch gegebenenfalls ein Einspeiseprozess an die Stromtankstelle gemessen und überwacht werden. Des Weiteren kann die Messeinrichtung den Eigenverbrauch der Stromtankstelle differenziert messen, um eine Doppelzählung bereits bezahlter Energie auszuschließen.

Das Verschlüsselungsmodul unterstützt vorzugsweise Verschlüsselungsverfahren, die den vom deutschen Bundesamt für Sicherheit in der Informationstechnik (BSI) definierten Standards entsprechen, und stellt mindestens einen kryptographisch gesicherten Speicherbereich bereit, in dem die Schlüssel gespeichert werden.

Mit Hilfe des Verschlüsselungsmoduls wird mindestens der über die Messeinrichtung ermittelte Verbrauchs- oder Einspeisewert verschlüsselt. Sie kann aber auch für die Verschlüsselung weiterer Fahrzeugzustandsdaten verwendet werden, um deren Übertragung sicherer zu gestalten. Das Mittel zur Signierung sollte mindestens die Verbrauchs- und/oder die Einspeisedaten mit einem eindeutigen Signaturstempel, vorzugsweise einer Kennnummer, zur Identifikation auf dem Abrechnungsserver versehen. Vorzugsweise unterstützt es ein Signaturverfahren, das eine eichrechtliche Zulassung zur Abrechnung der damit signierten Mess-, Verbrauchs- und Steuerinformationen ermöglicht.

Gemäß einer vorteilhaften Weiterentwicklung der Vorrichtung sind/ist mit dem zentralen Steuergerät über entsprechende Schnittstellen weiterhin ein Display und/oder ein Eingabegerät verbunden. Das Eingabegerät kann gegebenenfalls als Lesegerät ausgestaltet sein, welches die Kennnummer von einem portablen Datenspeichermedium des Nutzers der Speicher- und Verbrauchseinheit liest, beispielsweise von einer Kreditkarte, einem Transponderchip oder einem RFID. Über das Eingabegerät könnte gemäß einer Ausführungsvariante die Eingabe der Kennnummer oder einer sonstigen Benutzererkennung, beispielsweise eines PIN-Codes oder einer Kreditkartennummer, erfolgen.

Gegenstand der vorliegenden Erfindung ist weiterhin eine Stromtankstelle mit einem Anschluss an eine elektrische Energieversorgung und mindestens einem Anschlussmittel für eine elektrische Verbindung mit einem an der mobilen Speicher- und Verbrauchseinheit vorhandenen Akkumulator, wobei die Stromtankstelle mit Hilfe der genannten Vorrichtung gesteuert wird.

Die erfindungsgemäße Integration eines Kommunikationsmoduls in die Steuervorrichtung für eine Stromtankstelle hat insbesondere den Vorteil, dass somit Transaktionsdaten von oder zu der Stromtankstelle übermittelt werden können. So können vorzugsweise Strompreise, Strompreis-Ober- und Untergrenzen oder Strommengen als Transaktionsdaten übertragen werden, denen jeweils ein bestimmter Zeitpunkt oder Zeitraum zugeordnet werden kann. Die Transaktionsdaten können dazu gegebenenfalls über das Eingabegerät erfasst und über das Display angezeigt werden.

Die Speicher- und Verbrauchseinheit kann im Sinne der vorliegenden Erfindung vorzugsweise ein Fahrzeug mit mindestens einem elektrischen Antrieb sein. Unter einem derartigen Elektrofahrzeug wird ein Fahrzeug mit mindestens einem elektrischen Antrieb verstanden. Dies beinhaltet auch die Klasse der Fahrzeuge, die nur ergänzend mit einem elektrischen Antrieb ausgestattet sind, wie beispielsweise Hybridfahrzeuge. Wesentliches Merkmal eines Elektrofahrzeuges in diesem Sinne ist die Notwendigkeit eines elektrischen Energiespeichers, also einer Batterie bzw. eines Akkumulators. Durch Anbindung an ein elektrisches Versorgungsnetz kann dieser Akkumulator regelmäßig aufgeladen werden. Die Speicher- und Verbrauchseinheit im Sinne der vorliegenden Erfindung kann weiterhin auch eine Vorrichtung zur Bereitstellung von elektrischer Energie sein. Dabei können insbesondere auch die oben genannten Elektrofahrzeuge, also deren Akkumulatoren, zum Einspeisen von elektrischer Energie genutzt werden. Es kann weiterhin zweckmäßig sein, das Elektrofahrzeug dazu zusätzlich mit einer Vorrichtung zur Gewinnung von elektrischer Energie zu kombinieren, also beispielsweise mit einer auf dem Dach des Elektrofahrzeugs montierten Fotovoltaikanlage.

Als Stromtankstelle wird im Sinne dieser Erfindung eine Ladestation für eine mobile Speicher- und Verbrauchseinheit verstanden. Eine solche Stromtankstelle kann sich dazu im privaten Besitz in dessen Hausnetz befinden oder im Besitz eines Dritten an einem, ggf. öffentlich, für den Fahrzeugeigentümer zugänglichen Ort befinden.

Die erfindungsgemäße Steuervorrichtung für eine Stromtankstelle kann besonders vorteilhaft zur Durchführung eines Verfahrens zum ortsunabhängigen Strombezug und/oder zur ortsunabhängigen Stromeinspeisung einer mobilen Speicher- und Verbrauchseinheit an einer ortsfesten Stromtankstelle eingesetzt werden, wenn eine Vielzahl von Stromtankstellen über Stromleitungen mindestens eines Stromverteilnetzbetreibers mit Strom von mindestens einem Stromlieferanten versorgt werden und mindestens folgende Verfahrensschritte durchgeführt werden:
- Herstellen einer ersten Kommunikationsverbindung zwischen der Speicher- und Verbrauchseinheit und der Stromtankstelle bei räumlicher Annäherung der mobilen Speicher- und Verbrauchseinheit an eine ortsfeste Stromtankstelle, wobei der Speicher- und Verbrauchseinheit eine eindeutige Kennnummer zugeordnet ist und die Stromtankstelle einen Stromzähler mit einer Zählernummer trägt;
- Übermittlung eines Datenpaketes, enthaltend mindestens die Kennnummer und die Zählernummer, über eine zweite Kommunikationsverbindung an einen Abrechnungsserver;
- Zuordnung der Speicher- und Verbrauchseinheit mit Hilfe der Kennnummer zu einem Stromlieferanten und Zuordnung des Stromzählers mit Hilfe der Zählernummer zu einem Verteilnetzbetreiber mit Hilfe der auf dem Abrechnungsserver dazu hinterlegten Daten;
- Freischalten der Stromtankstelle nach erfolgreicher Zuordnung am Abrechnungsserver;
- Abgabe von Strom an die Speicher- und Verbrauchseinheit oder Einspeisung von Strom von der Speicher- und Verbrauchseinheit an die Stromtankstelle über ein Ladekabel oder über eine berührungsfreie, vorzugsweise induktive oder kapazitive, Stromübertragung; und
- Übermittlung der von der Speicher- und Verbrauchseinheit an der Stromtankstelle entnommenen oder eingespeisten Strommenge über die Kommunikationsverbindung an den Abrechnungsserver.

Ein derartiges Verfahren ist Gegenstand der gleichzeitig eingereichten deutschen Patentanmeldung 10 2008 044 526.6. Dieses Verfahren ermöglicht es einem Nutzer der mobilen Speicher- und Verbrauchseinheit unter Verwendung der erfindungsgemäßen Vorrichtung an einer beliebigen Stromtankstelle mit hohem Bedienungskomfort elektrische Energie zu beziehen oder in ein Stromnetz einzuspeisen, wobei sofort eine wunschgemäße Abrechnung über einen ausgewählten Stromlieferanten erfolgen kann. Ein derartiger Strombezug bzw. eine derartige Stromeinspeisung bietet damit ähnlich gestaltete Nutzungsmöglichkeiten, wie sie bisher lediglich von festen Heimanschlüssen bekannt waren.

Weitere Vorteile der erfindungsgemäßen Steuervorrichtung für eine Stromtankstelle ergeben sich auch aus der nachfolgenden Erläuterung der Verwendung der Vorrichtung. Vorzugsweise erfolgt bei der räumlichen Annäherung der mobilen Speicher- und Verbrauchseinheit an eine ortsfeste Stromtankstelle ein automatischer Verbindungsaufbau der ersten Kommunikationsverbindung zwischen der Speicher- und Verbraucheinheit und der Stromtankstelle. Diese Ausgestaltung erlaubt dem Nutzer der Speicher- und Verbrauchseinheit, den Strombezug oder die Stromeinspeisung ohne Zeitverzögerung beginnen zu können.

Vorzugsweise erfolgt die erste Kommunikationsverbindung kabelgebunden, insbesondere über das Ladekabel oder über ein separates Datenkabel, oder über Funk, insbesondere über WLAN, ZIGBee, Bluetooth, Transpondertechnologie oder RFID. Dabei kann die zweite Kommunikationsverbindung zwischen der Stromtankstelle und dem Abrechnungsserver kabelgebunden, vorzugsweise über DSL, ISDN, Festnetztelefon oder Powerline (Trägerfrequenzanlage), oder über Funk erfolgen. Alternativ oder auch zusätzlich kann die zweite Kommunikationsverbindung auch direkt zwischen der Speicher- und Verbrauchseinheit und dem Abrechnungsserver über Funk erfolgen. Vorzugsweise wird die zweite Kommunikationsverbindung nach einer der beiden genannten Möglichkeiten über Funk als GSM, GPRS, UMTS, WiMAX, Funkrundsteuerung oder Paging ausgestaltet. Die letztgenannten Funkübertragungssysteme haben den Vorteil, dass auch gegebenenfalls größere Reichweiten möglich sind.

Auf dem Abrechnungsserver werden vorzugsweise Daten zu mindestens einem Übertragungsnetzbetreiber hinterlegt. Es kann weiter zweckdienlich sein, auch Daten zu mindestens einem Stromverteilnetzbetreiber und/oder Daten zu mindestens einem Stromlieferanten zu hinterlegen.

Der Bezug und die Einspeisung von Strom durch eine oder mehrere Speicher- und Verbrauchseinheiten an einer der Stromtankstellen kann zeitlich und/oder preislich und/oder aufgrund von Regelstrategien zur Optimierung der Netzstabilität des Stromverteilnetzbetreibers erfolgen.

Vorzugsweise werden über die erste und/oder die zweite Kommunikationsverbindung Transaktionsdaten übermittelt. Die Transaktionsdaten können dabei insbesondere Strompreise, Strompreis-Ober- und Untergrenzen oder Strommengen sein, denen jeweils ein bestimmter Zeitpunkt oder Zeitraum zugeordnet werden kann. Die Transaktionsdaten werden gegebenenfalls über ein Eingabegerät an der Speicher- und Verbrauchseinheiten erfasst und über ein Display an der Speicher- und Verbrauchseinheiten angezeigt.

Die Abrechnung des Strombezugs an der Stromtankstelle bzw. der entsprechenden Stromeinspeisung kann vorzugsweise auf dem Abrechnungsserver mithilfe einer Software erfolgen. Ein solches Computerprogramm kann dazu einen oder mehrere der oben genannten Verfahrensschritte ausführen.

Weitere Vorteile und Einzelheiten der erfindungsgemäßen Steuervorrichtung für eine Stromtankstelle ergeben sich aus den anhand der Zeichnungen beschriebenen und die Erfindung nicht einschränkenden Ausführungsbeispielen.

Dabei zeigen
- Fig.1.: eine abstrakte Darstellung des Verfahrens zum ortsunabhängigen Strombezug und/oder zur ortsunabhängigen Stromeinspeisung unter Verwendung der erfindungsgemäßen Steuervorrichtung für eine Stromtankstelle und
- Fig.2.: die schematische Darstellung eines Ausführungsbeispiels der erfindungsgemäßen Steuervorrichtung für eine Stromtankstelle.

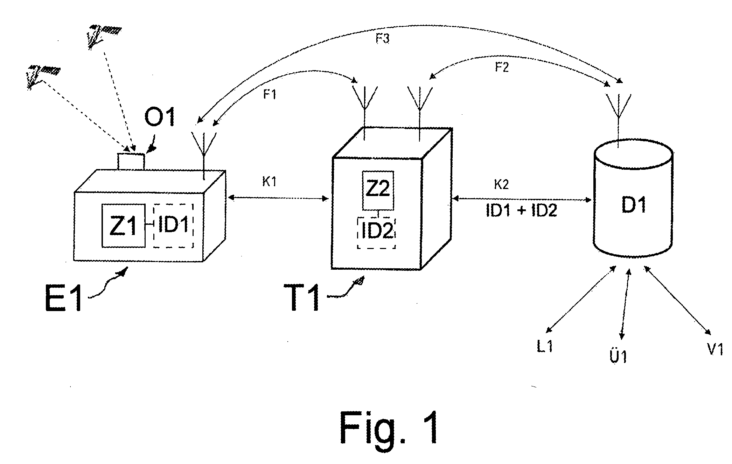

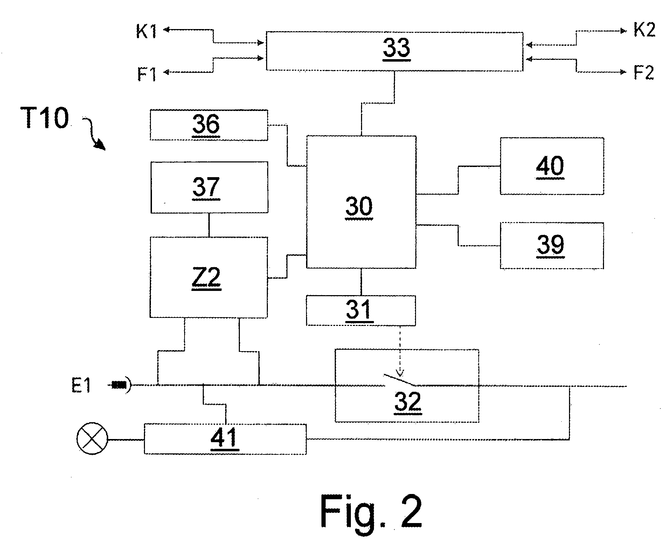

Gemäß der Fig. 1 ist die Anordnung eines Elektrofahrzeuges E1 an einer Stromtankstelle T1, welche in ein Abrechnungssystem integriert ist, gemäß einem Ausführungsbeispiel abstrakt dargestellt. Die mobile Speicher- und Verbrauchseinheit E1 ist bei diesem Ausführungsbeispiel ein Elektrofahrzeug. Die ortsfeste Stromtankstelle T1, ausgewählt aus einer Vielzahl von zeichnerisch nicht dargestellten Stromtankstellen T1 - Tn, ist über Stromleitungen mit mindestens einem Verteilnetzbetreiber V1 verbunden und wird über diese Stromleitungen mit elektrischem Strom mindestens eines Stromlieferanten L1 versorgt. Ein für den Strombezug oder die Einspeisung geeigneter mobile Stromzähler an der Speicher- und Verbrauchseinheit E1 ist Gegenstand der zeitgleich eingereichten deutschen Patentanmeldung 10 2008 044 527.4. Die Stromtankstelle T1 ist mit einer in Fig. 2 dargestellten Steuervorrichtung T10 ausgestattet.

Beim Annähern des Elektrofahrzeuges E1 an die Stromtankstelle T1 wird zwischen dem Elektrofahrzeug-E1 und der Stromtankstelle T1 gemäß der Fig. 1 eine erste Kommunikationsverbindung K1 hergestellt. Diese erste Kommunikationsverbindung K1 ist bei dem dargestellten Ausführungsbeispiel als Funkverbindung F1 ausgestaltet. Da diese Funkverbindung F1 lediglich für relativ kurze Distanzen ausgelegt sein muss, eignen sich hierfür insbesondere WLAN, ZIGBee, Bluetooth, Transpondertechnologie oder RFID. Nach Herstellung der ersten Kommunikationsverbindung K1 wird ein Datenpaket über eine zweite Kommunikationsverbindung K2 an ein Datenmanagementsystem (Abrechnungsserver) D1 übermittelt, wobei dieses Datenpaket mindestens die Kennnummer ID1 und die Zählernummer ID2 enthält. Dem Elektrofahrzeug E1 ist eine eindeutige Kennnummer ID1 zugeordnet und die Stromtankstelle T1 ist mit einer Steuervorrichtung T10 mit einer dieser zugeordneten Zählernummer ID2 gemäß der Fig. 2 ausgestattet. Auf dem Abrechnungsserver D1 kann nun eine Zuordnung des Elektrofahrzeuges 1 mithilfe der Kennnummer ID1 zu einen Stromlieferanten L1 sowie eine Zuordnung der Steuervorrichtung T10 mithilfe der Zählernummer ID2 zu einem Verteilnetzbetreiber V1 mithilfe der auf dem Abrechnungsserver D1 dazu hinterlegten Daten erfolgen. Nach einer entsprechenden positiven Zuordnung kann die Stromtankstelle T1 mithilfe der zweiten Kommunikationsverbindung K2 freigeschaltet werden. Die zweite Kommunikationsverbindung K2 zwischen der Stromtankstelle T1 und dem Abrechnungsserver D1 kann kabelgebunden, insbesondere über DSL, ISDN, Festnetztelefon oder Powerline, oder über Funk F2 erfolgen. Gemäß eines alternativen Ausführungsbeispiels kann die Kommunikationsverbindung K2 direkt zwischen dem Elektrofahrzeug E1 und dem Abrechnungsserver D1 über Funk F3 erfolgen.

Die entsprechenden Funkverbindungen F2 und F3 müssen bei beiden Ausführungsbeispielen für größere Entfernungen ausgelegt sein, sodass insbesondere GSM, GPRS, UMTS, WiMAX, Funkrundsteuerung oder Paging in Frage kommen.

Nach der Freischaltung der Stromtankstelle T1 kann nun die Abgabe von Strom an das Elektrofahrzeug E1 oder die Einspeisung von Strom von dem Elektrofahrzeug E1 an die Stromtankstelle T1 über ein Ladekabel oder über eine berührungsfreie induktive Stromübertragung erfolgen. Die letztgenannte Möglichkeit der berührungsfreien induktiven Stromübertragung zwischen dem Elektrofahrzeug E1 und der Stromtankstelle T1 hat den besonderen Vorteil, dass bei der Energieübertragung überhaupt keine physische Verbindung zwischen dem Elektrofahrzeug E1 und der Stromtankstelle T1 notwendig ist, wenn auch die erste Kommunikationsverbindung K1 als Funkverbindung F1 ausgestaltet ist. Daraus ergibt sich für den Nutzer des Elektrofahrzeuges E1 ein besonders hoher Bedienungskomfort.

Nach Beendigung der Energieübertragung kann der von dem Elektrofahrzeug E1 an der Stromtrankstelle T1 entnommene oder eingespeiste Strombetrag über die Kommunikationsverbindung K2 an den Abrechnungsserver D1 übermittelt werden.

Gemäß der Fig. 2 enthält die Steuervorrichtung T10 für eine Stromtankstelle T1 folgende Komponenten: ein zentrales Steuergerät 30; einen Aktor 31 zur Betätigung eines Schalters 32, um den Ladevorgang und/oder den Einspeisevorgang zu starten und zu stoppen; ein Kommunikationsmodul 33 zur Aufbereitung von Daten aus dem Steuergerät 30 für die Kommunikation mit der mobilen Speicher- und Verbrauchseinheit E1 und/oder mit einem Abrechnungsserver D1 sowie zur Umwandlung von eintreffenden Signalen in für das Steuergerät 30 verarbeitbare Daten; eine Messeinrichtung Z2 zur Messung der durchfließenden elektrischen Energie bei der Aufladung der mobilen Speicher- und Verbrauchseinheit E1 oder beim Einspeisen in die Stromtankstellen T1 ein Verschlüsselungsmodul 36 zur Verschlüsselung der vom Steuergerät 30 erzeugten Daten und ein mit der Messeinrichtung Z2 verbundenes Mittel 37 zur Signierung der von der Messeinrichtung Z2 ermittelten Daten mit einer Zählernummer ID2.

Das Kommunikationsmodul 33, der Aktor 31, die Messeinrichtung Z2 und das Verschlüsselungsmodul 36 sind mit dem zentralen Steuergerät 30 über interne Schnittstellen verbunden. Die Messeinrichtung Z2 kann weiterhin den Energieverbrauch eines oder mehrerer Eigenverbraucher 41 der Stromtankstelle T1 messen.

Mit dem zentralen Steuergerät 30 sind/ist weiterhin ein Display 39 und/oder ein Eingabegerät 40 verbunden.

Im Kommunikationsmodul 33 werden also Daten aus dem Steuergerät 30 für die Kommunikation über die erste Kommunikationsverbindung K1, gegebenenfalls als Funkverbindung F1 ausgestaltet, mit dem Elektrofahrzeug E1 und/oder für die Kommunikation über die zweite Kommunikationsverbindung K2, gegebenenfalls als Funkverbindung F2 ausgestaltet, mit einem Abrechnungsserver D1 aufbereitet.

Das zentrale Steuergerät 30 ist die Schaltzentrale innerhalb der Steuervorrichtung T10. Das Steuergerät 30 bezieht dazu über interne Schnittstellen insbesondere Informationen, die zur Identifikation sowie zur Verschlüsselung der über die Messeinrichtung Z2 ermittelten Daten erforderlich sind. Gleichzeitig steuert das Steuergerät 30 den Aktor 31, der einen Schalter 32 betätigt, um bei erfolgter Freigabe den Ladevorgang eines zeichnerisch nicht dargestellten Akkumulators des Elektrofahrzeugs E1 zu starten oder zu stoppen. Dieser Vorgang ist bidirektional, das heißt ebenso wird über den Aktor 31 die Einspeisung aus dem Akkumulator in die Stromtankstelle T1 gestartet und gestoppt. Die Freigabe kann dabei über die erste Kommunikationsverbindung K1, gegebenenfalls als Funkverbindung F1 ausgestaltet, und/oder über die zweite Kommunikationsverbindung K2, gegebenenfalls als Funkverbindung F2 ausgestaltet, erfolgen.

Die in Fig. 2 dargestellte Steuervorrichtung T10 für eine Stromtankstelle T1 ist in eine Stromtankstelle T1 nach Fig. 1 integriert.

Der Abrechnungsserver D1 empfängt also über die Kommunikationsverbindungen K2, F2 und/oder F3 Messdaten von dem Stromzähler Z1 und/oder über die Kommunikationsmodul 33 von der Steuervorrichtung T10, welche direkt dem jeweiligen Elektrofahrzeug E1 bzw. der Stromtankstelle T1 zugeordnet werden können. Auf dem Abrechnungsserver ist dazu hinterlegt, welchem Stromlieferanten der Stromzähler Z1 mit der Kennnummer ID1 zugeordnet ist und welchem Verteilnetzbetreiber V1 die Steuervorrichtung T10 mit der Zählernummer ID2 zugeordnet ist. Das ermöglicht erstmals die kundenspezifische Abrechnung der aus dem Stromnetz entnommenen Menge elektrischer Energie bei einem sich örtlich dynamisch verhaltenen Energieverbrauch. Als Lieferant elektrischer Energie wird im Sinne dieser Erfindung ein Energieversorgungsunternehmen verstanden, welches eine Geschäftsbeziehung mit dem Besitzer eines Elektrofahrzeuges E1 zur Belieferung mit elektrischer Energie unterhält. Mithilfe der Stromtankstelle T1 und dem Abrechnungsserver D1 wird es für den Stromlieferanten L1 erstmals möglich, das Elektrofahrzeug E1 abzurechnen, unabhängig davon, welche Stromtankstelle T1 dieses aufsucht und unabhängig davon, ob die Verbrauchsdaten über die zweite Kommunikationsverbindung K2 bzw. F2 von der Stromtankstelle T1 zum Abrechnungsserver D1 gelangen oder ob der Abrechnungsserver D1 diese Daten direkt vom Elektrofahrzeug E1 über eine Funkverbindung F3 erhält.

Als Verteilnetzbetreiber V1 wird ein Energieversorgungsunternehmen verstanden, dessen Geschäftszweck im Aufbau und Betrieb des Strom-Verteilnetzes besteht. In diesem Verteilnetz befindet sich die Stromtankstelle T1 an einem definierten Ort. Der Verteilnetzbetreiber V1 hat mit dem Stromlieferanten L1 eine vertragliche Beziehung, die es dem Stromlieferanten L1 erlaubt, flexibel innerhalb des Gebietes des Verteilnetzbetreibers beliebige Stromtankstellen T1 - Tn dazu zu nutzen, den Besitzer des Elektrofahrzeuges E1 mit elektrischer Energie zu beliefern. Beim Strombezug fällt ein Nutzungsentgelt an, welches der Kunde auf Basis der Messeinrichtung Z2 über den Stromlieferanten L1 an den Verteilnetzbetreiber V1 bezahlt. Bei der Einspeisung aus dem Elektrofahrzeug E1 in das Netz des Verteilnetzbetreibers V1 erhält der Besitzer des Elektrofahrzeuges E1 eine Einspeisevergütung vom Verteilnetzbetreiber V1, die ebenfalls auf Basis der Messeinrichtung Z2 errechnet wird.

Als Übertragungsnetzbetreiber Ü1 wird ein Energieversorgungsunternehmen verstanden, dessen Geschäftszweck in dem Aufbau und Betrieb des Übertragungsnetzes besteht. Als weitere Kernaufgabe, die sich der Übertragungsnetzbetreiber Ü1 mit dem Verteilnetzbetreiber V1 teilt, wird die Sicherstellung der Netzstabilität durch ein entsprechendes Angebot von Regelenergie betrieben. Diese Regelenergie kann situationsabhängig durch das Elektrofahrzeug E1 in das Netz des Verteilnetzbetreibers V1 eingespeist werden und wird über die Strecke Elektrofahrzeug E1 - Kommunikationsverbindung K1 - Stromtankstelle T1 - zweite Kommunikationsverbindung K2 - Abrechnungsserver D1 verrechnet.

Neben der Möglichkeit zur Abrechnung des örtlich flexiblen Strombezugs ist über die Anordnung Elektrofahrzeug E1 - erste Kommunikationsverbindung K1 - Stromtankstelle T1 - zweite Kommunikationsverbindung K2 - Abrechnungsserver D1 ebenfalls erstmals die Abrechnung der Einspeisung elektrischer Energie aus dem elektrischen Speicher eines Elektrofahrzeuges E1 in das Netz des Verteilnetzbetreibers V1 oder aber direkt in das Hausnetz zum Eigenverbrauch möglich. Damit bildet das Elektrofahrzeug eine "virtuelle Versorgungsinsel", die in Zeiten hohen Energieverbrauchs das öffentliche Versorgungsnetz des Verteilnetzbetreibers V1 entlastet. Das erfindungsgemäße Verfahren stellt dies durch eine differenzierte Messung der entnommenen und eingespeisten Energie sicher, mit der Doppelzählung ausgeschlossen wird. Diese differenzierte Messung kann ggf. auch durch mehrere Messeinrichtungen (Submetering) erfolgen.

Die Einspeisung kann preislich oder zeitlich gesteuert oder aber aufgrund von Regelstrategien zur Optimierung der Netzstabilität des Verteilnetzbetreibers V1 erfolgen. Die erste Kommunikationsverbindung K1 zwischen dem Elektrofahrzeug E1 und der Stromtankstelle T1 kann beliebig gestaltet sein. So kann die Kommunikationsverbindung K1 einerseits kabelgebunden ausgestaltet sein.

Dabei ist zu unterscheiden zwischen einer Kommunikation unter Benutzung des Ladekabels, wie beispielsweise wechselstrombasierte Verfahren, insbesondere PLC, vorzugsweise Powerline, nach Homeplug usw. oder Digitalstrom (Informationsübertragung im Basisband in der Nähe des Nulldurchganges des Wechselstromes). Die Kommunikationsverbindung K2 kann aber auch über ein separates Datenkabel erfolgen, welches parallel zum Ladekabel eingesetzt wird, beispielsweise TCP/IP über Ethernetkabel CAT5 mit RJ45-Buchsen oder als serielle Verbindung RS232, RS485 oder ein sonstiges Bussytem.

Die Ausgestaltung der ersten Kommunikationsverbindung K1 als Funkverbindung F1 über RFID- oder Transpondertechnologie würde beispielsweise genügen, um die Kennnummer ID1 und ggf. den Zählerstand des Stromzählers Z1 auszulesen.

Bei der direkten funkbasierten Kommunikation F3 zwischen dem Elektrofahrzeug E1 und dem Abrechnungsserver D1 nimmt das Elektrofahrzeug E1 über die erste Kommunikationsverbindung K1 Kontakt zu der Stromtankstelle T1 auf, um den Zählerstand der Messeinrichtung Z2 mit der Zählernummer ID2 abzuholen. Dann schickt das Elektrofahrzeug E1 über die Funkverbindung F3 einen Datensatz mit der Kennnummer ID1 und der Zählernummer ID2 an den Abrechnungsserver und holt sich dort die Freigabe zum Bezug von Strom bzw. zum Einspeisen von Strom. Nach dem "Tankvorgang" erfolgt über dieselbe Strecke die Übermittlung der Stromverbrauchswerte an den Abrechnungsserver D1. Als zweckmäßige Weiterentwicklung des Systems ist eine Kombination mit einem Ortungssystem O1 möglich. Die Ortung kann dazu satellitengestützt, beispielsweise über GPS, Galileo usw., mobilfunkgestützt über die Lokalisierung innerhalb der GSM-Funkzelle oder aber auch als Car-to-car-Kommunikation erfolgen, bei welcher verschiedenste Elektrofahrzeuge E1 sich über Zustandsdaten des Fahrzeugs oder über Informationen, beispielsweise bezüglich der nächsten Stromtankstelle T1 bis Tn, austauschen. Auf Basis dieser Daten ist eine Erweiterung möglich, um den bisherigen Energieverbrauch und den Ladezustand der Batterie mit der geplanten Fahrtroute zu einer rechnerischen Reichweite zu kombinieren und daraus die optimale Stromtankstelle T1 bis Tn in Abhängigkeit vom aktuellen Strombezugspreis und der jeweiligen Netzauslastung zu ermitteln.

### Bezugszeichenliste:

- E1: Mobile Speicher- und Verbrauchseinheit
- T1: Ortsfeste Stromtankstelle
- O1: Ortungssystem
- D1: Datenmanagementsystem (Abrechnungsserver)
- L1: Stromlieferant
- Ü1: Übertragungsnetzbetreiber
- V1: Verteilnetzbetreiber
- Z1: Stromzähler
- Z2: Messeinrichtung
- ID1: Kennnummer
- ID2: Zählernummer
- F1, F2, F3: Funkverbindung 1, 2 und 3
- K1, K2: Kommunikationsverbindung 1 und 2
- T10: Steuervorrichtung
- E10: Mobiler Stromzähler
- 30: Zentrales Steuergerät
- 31: Aktor
- 32: Schalter
- 33: Kommunikationsmodul
- 36: Verschlüsselungsmodul
- 37: Mittel zur Signierung
- 39: Display
- 40: Eingabegerät
- 41: Eigenverbraucher

## Patentansprüche

1. Steuervorrichtung (T10) in einer Stromtankstelle (T1) integriert, welche für einen Strombezug und/oder eine Stromeinspeisung einer mobilen Speicher- und Verbrauchseinheit (E1) geeignet ist und eine benutzerspezifische Abrechnung bei mindestens einem Stromlieferanten erlaubt, wobei die Steuervorrichtung (T10) mindestens folgende Komponenten enthält:
- ein zentrales Steuergerät (30),
- einen Aktor (31) zur Betätigung eines Schalters (32), nach erfolgter Freigabe durch das Steuergerät (30) um den Ladevorgang und/oder Einspeisevorgang zu starten und zu stoppen,
- ein Kommunikationsmodul (33) zur Aufbereitung von Daten aus dem Steuergerät (30) für die Kommunikation mit der mobilen Speicher- und Verbrauchseinheit (E1) einschliesslich Uebertragung von deren eindeutiger Kennnummer und Kommunikation mit einem Datenmanagementsystem (D1), auf welchem Daten zu mindestens einem Übertragungsnetzbetreiber und Daten zu mindestens einem Stromverteilnetzbetreiber und Daten zu mindestens einem Stromlieferanten hinterlegt sind, sowie zur Umwandlung von eintreffenden Signalen in für das Steuergerät (30) verarbeitbare Daten, so dass eine Freigabe erfolgen kann,
- eine Messeinrichtung (Z2) zur Messung der durchfließenden elektrischen Energie bei der Aufladung der mobilen Speicher- und Verbrauchseinheit (E1) oder beim Einspeisen in die Stromtankstelle (T1),
- ein Verschlüsselungsmodul (36) zur Verschlüsselung der vom Steuergerät (30) erzeugten Daten und
- ein mit der Messeinrichtung (Z2) verbundenes Mittel (37) zur Signierung der von der Messeinrichtung (Z2) ermittelten Daten mit einer Zählernummer (ID2),
wobei das Kommunikationsmodul (33), der Aktor (31), die Messeinrichtung (Z2) und das Verschlüsselungsmodul (36) mit dem zentralen Steuergerät (30) über interne Schnittstellen verbunden sind.

2. Vorrichtung nach Anspruch 1, **dadurch gekennzeichnet, dass** die Messeinrichtung (Z2) weiterhin den Energieverbrauch eines oder mehrerer Eigenverbraucher (41) der Stromtankstelle (T1) messen kann.

3. Vorrichtung nach Anspruch 1, **dadurch gekennzeichnet, dass** ein Mittel (37) zur Signierung derart mit der Messeinrichtung (Z2) verbunden ist, dass eine eichrechtliche Zulassung dieser Kombination und der damit erzeugten signierten Messwerte für Abrechnungszwecke erzielt werden kann.

4. Vorrichtung nach Anspruch 1, **dadurch gekennzeichnet, dass** das zentrale Steuergerät (30) mindestens einen Microprozessor, ein persistentes Speicherelement, eine Einrichtung zur Selbstüberwachung und eine Echtzeituhr enthält.

5. Vorrichtung nach Anspruch 1, **dadurch gekennzeichnet, dass** das Kommunikationsmodul (33) einen modularen Aufbau aufweist, der eine einfache Adaption an verschiedene Übertragungsmedien, Datenübertragungsprotokolle und Datenübertragungsstandards durch Parametrisierung oder einen Modulwechsel erlaubt.

6. Vorrichtung nach Anspruch 1, **dadurch gekennzeichnet, dass** die Messeinrichtung (Z2) mindestens eine Signatureinrichtung enthält oder derart mit einer Signatureinrichtung verbunden ist, dass eine eichrechtliche Zulassung dieser Kombination und der damit erzeugten signierten Messwerte für Abrechnungszwecke erzielt werden kann.

7. Vorrichtung nach Anspruch 1, **dadurch gekennzeichnet, dass** das Verschlüsselungsmodul (36) Verschlüsselungsverfahren unterstützt, die den vom deutschen Bundesamt für Sicherheit in der Informationstechnik (BSI) definierten Standards entsprechen, und mindestens einen kryptographisch gesicherten Speicherbereich bereitstellt, in dem die Schlüssel gespeichert werden.

8. Vorrichtung nach Anspruch 1, **dadurch gekennzeichnet, dass** das Mittel (37) zur Signierung ein Signaturverfahren unterstützt, das eine eichrechtliche Zulassung zur Abrechnung der damit signierten Mess-, Verbrauchs- und Steuerinformationen ermöglicht.

9. Vorrichtung nach Anspruch 1, **dadurch gekennzeichnet, dass** mit dem zentralen Steuergerät (30) weiterhin ein Display (39) und/oder ein Eingabegerät (40) verbunden sind/ist.

10. Stromtankstelle (T1) mit einem Anschluss an eine elektrische Energieversorgung und mindestens einem Anschlussmittel für eine elektrische Verbindung mit einem an der mobilen Speicher- und Verbrauchseinheit (E1) vorhandenen Akkumulator, **dadurch gekennzeichnet, dass** die Stromtankstelle (T1) von einer Vorrichtung nach einem der Ansprüche 1 bis 10 gesteuert wird.

## Claims

1. A control device (T10) integrated in an electricity charging station (T1), which is suitable for an electricity purchase and/or electricity supply to a mobile storage and consumption unit (E1) and allows user-specific billing with at least one electricity supplier, wherein the control device (T10) contains at least the following components:
- a central control unit (30),
- an actuator (31) for actuating a switch (32) following release by the control unit (30), in order to start and stop the charging operation and/or the supply operation,
- a communication module (33) for the processing of data from the control unit (30) for communication with the mobile storage and consumption unit (E1), including transmission of its unique identification number and communication with a data management system (D1), in which data relating to at least one transmission network operator and data relating to at least one electricity distribution network operator and data relating to at least one electricity supplier are stored, and also for the conversion of incoming signals into data that can be processed by the control unit (30), so that a release can take place,
- a measuring device (Z2) for measuring the electrical energy flowing through during the charging of the mobile storage and consumption unit (E1) or during the supply to the electricity charging station (T1),
- an encrypting module (36) for encrypting data generated by the control unit (30) and
- a means (37) associated with the measuring device (Z2) of signing the data determined by the measuring device (Z2) using a meter number (ID2),
wherein the communication module (33), the actuator (31), the measuring device (Z2) and the encrypting module (36) are connected to the central control unit (30) via internal interfaces.

2. The device according to claim 1, **characterized in that** the measuring device (Z2) can furthermore measure the energy consumption of one or a plurality of private consumers (41) of the electricity charging station (T1).

3. The device according to claim 1, **characterized in that** the a means (37) of signing is connected to the measuring device (Z2), such that a calibrated approval of this combination and the signed readings produced therewith can be achieved for billing purposes.

4. The device according to claim 1, **characterized in that** the central control unit (30) contains at least one microprocessor, a persistent storage element, a self-monitoring device and a real-time clock.

5. The device according to claim 1, **characterized in that** the communication module (33) has a modular structure which allows simple adaptation to different transmission media, data transfer protocols and data transfer standards through parameterization or a change of module.

6. The device according to claim 1, **characterized in that** the measuring device (Z2) contains at least one signature device or is connected to a signature device, such that a calibrated approval of this combination and the signed readings produced therewith can be achieved for billing purposes.

7. The device according to claim 1, **characterized in that** the encrypting module (36) supports encryption processes which meet the standards laid down by the German Federal Office for Security in Information Technology (BSI) and provides at least one cryptographically secure storage area in which the codes are stored.

8. The device according to claim 1, **characterized in that** the means (37) of signing supports a signature process, which allows calibrated approval for the billing of measuring, consumption and control information signed therewith.

9. The device according to claim 1, **characterized in that** a display (39) and/or an input unit (40) is/are furthermore connected to the central control unit (30).

10. An electricity charging station (T1) having a connection to an electrical energy supply and at least one connection means for an electrical connection to an accumulator present on the mobile storage and consumption unit (E1), **characterized in that** the electricity charging station (T1) is controlled by a device according to one of the claims 1 to 10.

## Revendications

1. Dispositif de commande (T10) intégré dans une station-service électrique (T1), laquelle est conçue pour un ravitaillement en courant et/ou une alimentation en courant d'une unité mobile d'accumulation et de consommation (E1) et permet une facturation spécifique à l'utilisateur chez au moins un fournisseur de courant, le dispositif de commande (T10) comprenant au moins les éléments suivants :
- un appareil de commande central (30),
- un actionneur (31) pour l'actionnement d'un commutateur (32) une fois la validation effectuée par l'appareil de commande (30) afin de mettre en marche et arrêter le processus de charge et/ou d'alimentation,
- un module de communication (33) pour la préparation de données provenant de l'appareil de commande (30) pour la communication avec l'unité mobile d'accumulation et de consommation (E1) y compris la transmission du numéro d'identification univoque de celle-ci et la communication avec un système de gestion de données (D1) dans lequel des données concernant au moins un gestionnaire de réseau de transmission et des données concernant au moins un exploitant de réseau de distribution électrique et des données concernant au moins un fournisseur de courant sont déposées, ainsi que pour la conversion de signaux entrants en données pouvant être traitées par l'appareil de commande (30), de sorte qu'une validation peut avoir lieu,
- un dispositif de mesure (Z2) pour mesurer l'énergie électrique débitée lors de la charge de l'unité mobile d'accumulation et de consommation (E1) ou lors de l'alimentation de la station-service électrique (T1),
- un module de chiffrement (36) pour le chiffrement des données générées par l'appareil de commande (30) et
- un moyen (37) relié au dispositif de mesure (Z2) pour la signature des données déterminées par le dispositif de mesure (Z2) grâce à un chiffre de compteur (ID2),
le module de communication (33), l'actionneur (31), le dispositif de mesure (Z2) et le module de chiffrement (36) étant en liaison avec l'appareil de commande central (30) via des interfaces internes.

2. Dispositif selon la revendication 1, **caractérisé en ce que** le dispositif de mesure (Z2) peut en outre mesurer la consommation d'énergie d'un ou plusieurs auto-consommateurs (41) de la station-service électrique (T1).

3. Dispositif selon la revendication 1, **caractérisé en ce qu'**un moyen (37) pour la signature est en liaison avec le dispositif de mesure (Z2) de manière à ce qu'il soit possible d'obtenir une autorisation conforme à la loi sur les poids et mesures de cette combinaison et les valeurs de mesure générées signées grâce à cela pour des besoins de facturation.

4. Dispositif selon la revendication 1, **caractérisé en ce que** l'appareil de commande central (30) contient au moins un microprocesseur, un élément de stockage persistant, un dispositif pour l'auto-surveillance et une horloge en temps réel.

5. Dispositif selon la revendication 1, **caractérisé en ce que** le module de communication (33) présente une structure modulaire, laquelle permet une adaptation simple à différents moyens de transmission, protocoles de transmission de données et standards de transmission de données par paramétrage, ou un changement de module.

6. Dispositif selon la revendication 1, **caractérisé en ce que** le dispositif de mesure (Z2) contient au moins un dispositif de signature ou bien est en liaison avec un dispositif de signature de manière à ce qu'il soit possible d'obtenir une autorisation conforme à la loi sur les poids et mesures de cette combinaison et les valeurs de mesure générées signées grâce à cela pour des besoins de facturation.

7. Dispositif selon la revendication 1, **caractérisé en ce que** le module de chiffrement (36) supporte des procédés de chiffrement, lesquels correspondent aux standards définis par l'Office fédéral allemand de la sécurité dans la technologie de l'information (BSI), et met à disposition au moins une zone de stockage sécurisée par cryptographie, dans laquelle les clés sont stockées.

8. Dispositif selon la revendication 1, **caractérisé en ce que** le moyen (37) pour la signature supporte un procédé de signature, lequel permet une autorisation conforme à la loi sur les poids et mesures pour la facturation des informations de mesure, de consommation et de commande signées grâce à cela.

9. Dispositif selon la revendication 1, **caractérisé en ce qu'**un afficheur (39) et/ou un appareil de saisie (40) est en outre en liaison avec l'appareil de commande central (30).

10. Station-service électrique (T1) avec un raccordement à une alimentation en énergie électrique et au moins un moyen de raccordement pour une liaison électrique avec un accumulateur existant sur l'unité mobile d'accumulation et de consommation (E1), **caractérisée en ce que** la station-service électrique (T1) est commandée par un dispositif selon l'une des revendications 1 à 10.
